# EUROPÄISCHE PATENTSCHRIFT

(11) **EP 1 749 425 B1**
(45) Veröffentlichungstag und Bekanntmachung des Hinweises auf die Patenterteilung: **21.11.2007**
(21) Anmeldenummer: 05737935.6
(22) Anmeldetag: 13.04.2005
(51) Int. Cl.: H05K 3/00, B65G 37/00

(54) **TRANSPORTVORRICHTUNG**
TRANSPORT DEVICE
DISPOSITIF DE TRANSPORT

(30) Priorität: 13.05.2004 DE 102004023909
(43) Veröffentlichungstag der Anmeldung: 07.02.2007
(73) Patentinhaber: ATOTECH Deutschland GmbH, 10553 Berlin (DE)
(72) Erfinder: KLINGL, Heinz, 86356 Neusäss (DE)
(74) Vertreter: Banzer, Hans-Jörg
(86) Internationale Anmeldenummer: PCT/EP2005/003895
(87) Internationale Veröffentlichungsnummer: WO 2005/112528

(56) Entgegenhaltungen:
- EP-A- 0 032 530
- DE-A1- 4 301 742
- GB-A- 1 378 237
- US-A- 4 459 183
- US-A- 5 011 004

## Beschreibung

Die vorliegende Erfindung betrifft eine Transportvorrichtung, insbesondere eine Transportvorrichtung für Transportgut in Form von in einer nasschemischen Behandlungsanlage zu behandelnden Werkstücken, z.B. Leiterplatten oder -folien.

Anlagen zur Behandlung von Werkstücken, z.B. Anlagen zur nasschemischen Behandlung von Leiterplatten oder -folien, sind häufig als so genannte Durchlaufanlagen ausgestaltet, durch welche die zu behandelnden Werkstücke, z.B. in einer horizontalen Richtung, transportiert werden, während das zu behandelnde Werkstück von einem Behandlungsmedium angesprüht, angestrahlt oder angeschwallt wird. Hierfür sind entlang eines Transportweges entsprechende Düsen zur Abgabe des Behandlungsmediums angeordnet. Ein Transport des zu behandelnden Werkstückes bzw. Behandlungsgutes durch die Anlage erfolgt speziell bei flachem Behandlungsgut mit Hilfe von Transportmitteln in Form von sich drehenden Walzen, Rollen oder Rädern. Das Behandlungsgut kann dabei lose auf den Transportmitteln aufliegen oder durch beidseitig des Transportweges angeordnete Transportmittel bewegt werden. Die beidseitige Anordnung der Transportmittel ist insbesondere dann von Vorteil, wenn durch das Behandlungsmedium ein Druck gegen das Behandlungsgut ausgeübt wird. Ein weiterer Grund für die beidseitige Anordnung von Transportmitteln kann auch eine verbesserte Kraftübertragung auf das zu transportierende Behandlungsgut oder Transportgut bewirken, so dass ein Durchrutschen der Transportmittel und somit ein Stau in der Anlage vermieden wird. Im Falle einer beidseitigen Anordnung der Transportmittel wird effektiv verhindert, dass das Transportgut, z.B. durch das Behandlungsmedium, aus der Bahn gelenkt wird. In einer horizontalen Durchlaufanlage kann dies beispielsweise erfolgen, indem auf einer oberen Seite des Transportweges angeordnete Transportmittel das Transportgut mittels ihres Eigengewichts, durch zusätzliche Gewichte oder durch Federdruck gegenüber auf einer unteren Seite des Transportweges angeordneten Transportmitteln fixieren. Das Transportgut wird in diesem Fall durch den Kontakt mit den Transportmitteln, welche sich in einer Rotationsbewegung befinden, entlang des Transportweges in eine Transportrichtung bewegt. In der Regel sind entlang des Transportweges mehrere ähnlich ausgestaltete Transportmittel angeordnet.

Ein Antrieb der Transportmittel erfolgt in der Regel über eine parallel zu der Transportrichtung verlaufende Antriebswelle, deren Rotationsbewegung mit der Rotationsbewegung der Transportmittel geeignet verknüpft ist. Hierbei ist typischerweise eine Umlenkung der Rotationsbewegung der Antriebswelle um eine parallel zu der Transportrichtung verlaufende Drehachse in eine Rotationsbewegung um eine sich dazu senkrecht erstreckende Drehachse der Transportmittel erforderlich.

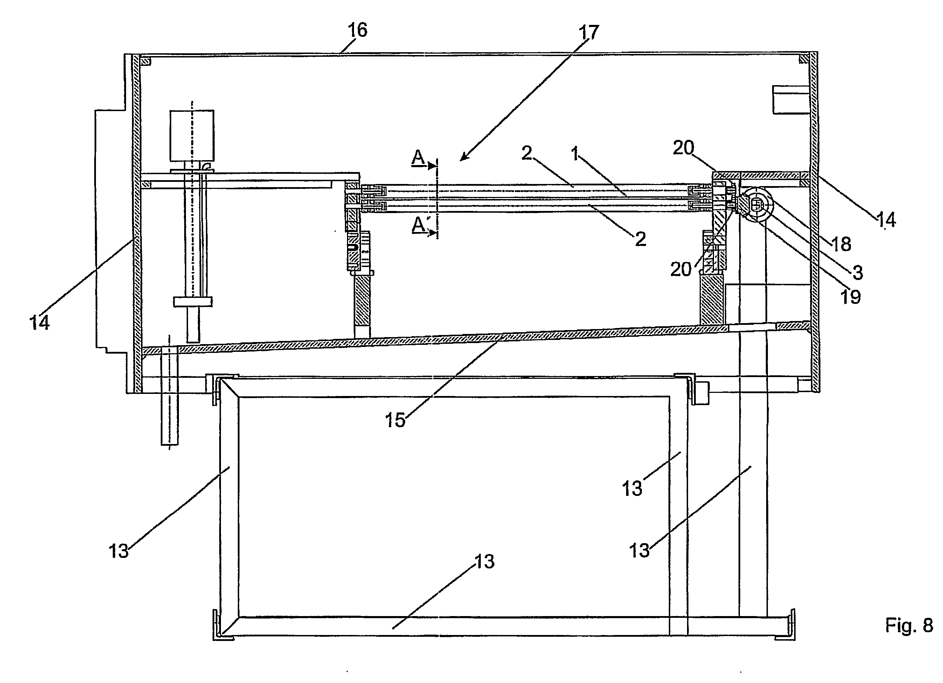

Fig. 8 zeigt einen Querschnitt durch eine horizontale Durchlaufanlage zur nasschemischen Behandlung von flachem Behandlungsgut in Form von Leiterplatten oder -folien, wobei der Schnitt senkrecht zu der Transportrichtung des Behandlungsgutes durchgeführt ist. Das Behandlungsgut 1 bewegt sich in dieser Darstellung in die Zeichnungsebene hinein. Die gesamte Anlage ruht auf einem Behälterunterbau 13. Eine Behandlungszone 17 ist von einem Boden 15, Seitenwänden 14 und einem abnehmbaren Deckel 16 begrenzt und erstreckt sich in einer lateralen Richtung senkrecht zu der Transportrichtung. An einer Seite der Behandlungszone 17 sind Aufbereitungseinrichtungen für das Behandlungsmedium untergebracht. An der gegenüberliegenden Seite befindet sich in diesem Beispiel ein Antriebssystem der Transportmittel 2. Bei diesem Beispiel sind die Transportmittel 2, welche das Behandlungsgut 1 durch die Anlage bewegen, in Form von Walzen oder Rädern ausgestaltet. Entlang der Transportrichtung sind mehrere der Transportmittel 2 vorgesehen (nicht dargestellt). Zum Antrieb der Transportmittel 2 verläuft in der Transportrichtung des Behandlungsgutes 1 eine Antriebswelle 3. Für jedes der Transportmittel 2, welches auf einer unteren Seite des Transportweges des Behandlungsgutes 1 angeordnet ist, ist auf der Antriebswelle 3 ein Kegelrad 18 angebracht. Dieses befindet sich im Eingriff mit einem Gegenkegelrad 19, welches starr auf einer Drehachse des auf der unteren Seite des Transportweges angeordneten Transportmittels 2 angebracht ist. Die Anordnung bestehend aus dem Kegelrad 18 und dem Gegenkegelrad 19 ermöglicht die erforderliche Umlenkung der Rotationsbewegung der Antriebswelle 3 in die Rotationsbewegung der Transportmittel 2. Auf der oberen Seite des Transportweges angeordnete Transportmittel 2 werden über Zahnräder 20 von den auf der unteren Seite des Transportweges angeordneten Transportmitteln 2 angetrieben. Die Rotationsbewegung der Antriebswelle 3 wird z.B. mittels eines Elektromotors (nicht dargestellt) bewirkt.

Um Variationen der Stärke des Behandlungsgutes 1 in einer vertikalen Richtung senkrecht zu der Transportrichtung ausgleichen zu können, sind die oberen Transportmittel 2 in einer nutähnlichen Führung gelagert. Diese Lagerung ermöglicht eine vertikale Bewegung der oberen Transportmittel 2, d.h. nach oben bzw. unten. Wird dickeres Behandlungsgut durch die Anlage transportiert, werden die oberen Transportmittel 2 von dem sich durch die Anlage bewegenden Behandlungsgut 1 nach oben gehoben. Umgekehrt verschieben sich bei dünnerem Behandlungsgut 1 die oberen Transportmittel 2, z.B. aufgrund ihres Eigengewichts, nach unten.

Bei einer derartigen Anordnung besteht ein Problem dahingehend, dass ein Eingriff der Zahnräder 20, welche die Rotationsbewegung der unteren Transportmittel 2 mit der Rotationsbewegung der oberen Transportmittel 2 verknüpfen, von der vertikalen Position der oberen Transportmittel 2 abhängt. Wenn das Behandlungsgut 1 sehr stark in der Dicke variiert, kann dies dazu führen, dass der Eingriff zeitweise nicht mehr ausreicht und dadurch der Antrieb der oberen Transportmittel 2 ruckt, ungleichmäßig wird oder gänzlich ausfällt. Hierdurch kann es wiederum zu einem Stau des Behandlungsgutes 1 auf dem Transportweg und damit letztendlich zu Ausschuss an Behandlungsgut 1 führen.

Eine Transportvorrichtung für Behandlungsanlagen der oben beschriebenen Art ist z.B. aus der DE 22 56 018 oder der DE 30 01 726 bekannt. Aus der US 4,459,183 ist ferner eine Transportvorrichtung bekannt, bei welcher die oberen Transportmittel über einen verschränkten Rundriemen von den unteren Transportmitteln angetrieben werden. Hierbei besteht ein Problem dahingehend, dass an der Kreuzungsstelle des Riemens ein Abrieb entsteht, welcher mit der Behandlungsflüssigkeit in Richtung des Behandlungsgutes gespült werden kann, so dass dieses verunreinigt wird.

Die Aufgabe der vorliegenden Erfindung besteht darin, eine Transportvorrichtung, insbesondere für Behandlungsanlagen der oben beschriebenen Art, bereitzustellen, welche die oben beschriebenen Probleme des Stands der Technik vermeidet und in verbesserter Weise eine Anpassung an variierende Stärken eines mit der Transportvorrichtung zu transportierenden Transportgutes ermöglicht.

Diese Aufgabe wird durch eine Transportvorrichtung gemäß Anspruch 1 gelöst. Die abhängigen Ansprüche definieren bevorzugte und vorteilhafte Ausführungsformen der Erfindung.

Erfindungsgemäß umfasst die Transportvorrichtung drehbar gelagerte Transportmittel zum Bewegen eines Transportgutes, z.B. Behandlungsgut in einer Behandlungsanlage in Form von Leiterplatten oder -folien, und Antriebsmittel, welche die Transportmittel in eine Rotationsbewegung versetzen, so dass das Transportgut durch die Rotationsbewegung in die Transportrichtung bewegt wird. Die Transportmittel, welche z.B. in Form von Walzen, Räder oder Rollen ausgestaltet sein können, sind dabei bezüglich eines Transportweges des Transportgutes derart angeordnet, dass sie mit dem Transportgut in Kontakt geraten, wenn dieses den Transportweg durchläuft. Hierfür erstreckt sich die Drehachse der Transportmittel in einer lateralen Richtung senkrecht zu der Transportrichtung. Um sich Variationen in der Stärke des Transportgutes in einer vertikalen Richtung senkrecht zu der Transportrichtung anpassen zu können, können die Transportmittel in der vertikalen Richtung beweglich gelagert sein. Erfindungsgemäß sind mindestens ein zylinderartig geformtes Spindelteil, welches auf einer Außenfläche eine gewindeartige Struktur aufweist, und mindestens ein Rotationsmittel mit entlang seines Umfangs angeordneten, sich in Richtung einer Drehachse des Rotationsmittels erstreckenden Vorsprüngen vorgesehen, wobei das mindestens eine Spindelteil und das mindestens eine Rotationsmittel vorzugsweise Bestandteile der Antriebsmittel sind. Das mindestens eine Rotationsmittel kann auch einheitlich oder einteilig mit den Transportmitteln ausgestaltet sein. Das Rotationsmittel ist insbesondere radförmig und wird im Folgenden als "Gegenrad" bezeichnet. Das mindestens eine Spindelteil und das mindestens eine Gegenrad sind dabei derart angeordnet, dass sich mindestens einer der Vorsprünge im Eingriff mit der gewindeartigen Struktur des Spindelteils befindet, so dass eine Rotationsbewegung des Spindelteils in eine Rotationsbewegung des Gegenrads übertragen wird. Die Rotationsbewegung des Gegenrads ist dabei mit der Rotationsbewegung der Transportmittel gekoppelt, vorzugsweise indem das Gegenrad und die Transportmittel, deren Rotationsbewegung miteinander gekoppelt sind, miteinander rotierend auf einer gemeinsamen Achse angebracht sind. Das mindestens eine Spindelteil ist vorzugsweise auf einer parallel zu der Transportrichtung verlaufenden Antriebswelle angeordnet, so dass es zusammen mit dieser rotiert.

Die erfindungsgemäße Transportvorrichtung bietet den Vorteil, dass der Eingriff der Vorsprünge des Gegenrads, welche z.B. als Nocken ausgestaltet sein können, in die gewindeartige Struktur des Spindelteils weitgehend unempfindlich gegen vertikale Lageveränderungen der Transportmittel ist. Dies bedeutet, dass sich bei einer vertikal beweglichen Lagerung das mindestens eine Gegenrad zusammen mit den Transportmitteln in der vertikalen Richtung bewegen kann, ohne dass ein Eingriff zwischen den Vorsprüngen des Gegenrads und der gewindeartigen Struktur des Spindelteils beeinträchtigt wird. Das Ausmaß der möglichen vertikalen Verschiebung hängt dabei vor allem von dem Durchmesser des Spindelteils ab. Dieses kann mit einem geringen Aufwand in der erforderlichen Größe bereitgestellt werden, um das benötigte Verschiebungsausmaß der Transportmittel bereitzustellen. Ein weiterer Vorteil besteht darin, dass mehrere Transportmittel, welche beidseitig des Transportweges angeordnet sind, mit einem gemeinsamen . Spindelteil angetrieben werden können. In einer horizontalen Durchlaufanlage kann es sich dabei speziell um oberhalb des Transportweges angeordnete Transportmittel und unterhalb des Transportweges angeordnete Transportmittel handeln.

In diesem Zusammenhang umfasst die Transportvorrichtung vorzugsweise Transportmittel, welche beidseitig des Transportweges angeordnet sind. Dabei sind vorzugsweise auf mindestens einer Seite des Transportweges die Transportmittel in der vertikalen Richtung beweglich gelagert. Ein erstes Gegenrad, dessen Rotationsbewegung mit der Rotationsbewegung von auf einer ersten Seite des Transportweges angeordneten Transportmitteln gekoppelt ist, umfasst entlang seines Umfangs angeordnete, sich in Richtung seiner Drehachse erstreckende Vorsprünge, z.B. in Form von Nocken, von welchen sich mindestens einer im Eingriff mit der gewindeartigen Struktur des mindestens einen Spindelteils befindet. Ein zweites Gegenrad, dessen Rotationsbewegung mit der Rotationsbewegung von auf einer der ersten Seite entgegengesetzten zweiten Seite des Transportweges angeordneten Transportmitteln gekoppelt ist, umfasst ebenfalls entlang seines Umfangs angeordnete sich in Richtung seiner Drehachse erstreckende Vorsprünge, von welchen sich mindestens einer im Eingriff mit der gewindeartigen Struktur des mindestens einen Spindelteils befindet. Es ist somit für die Transportmittel auf jeder Seite des Transportweges jeweils ein Gegenrad 5 vorgesehen, welches über das Spindelteil in Rotationsbewegung versetzt wird und dadurch die mit ihm gekoppelten Transportmittel antreibt. Auf diese Weise können z.B. Transportmittel auf einer oberen und einer unteren Seite des Transportweges durch ein einziges Spindelteil angetrieben werden.

Das mindestens eine Spindelteil ist vorzugsweise auf einer parallel zu der Transportrichtung verlaufenden Antriebswelle angeordnet, so dass es zusammen mit dieser rotiert. Dies geschieht derart, dass die gewindeartige Struktur auf der Außenfläche des Spindelteils bei einer Rotation der Antriebswelle einen Vorschub in die Transportrichtung gewährleistet. Ein Vorsprung bzw. eine Nocke des Gegenrads oder eines der Gegenräder, welches bzw. welche sich im Eingriff mit der gewindeartigen Struktur des Spindelteils befindet, wird somit durch die Rotationsbewegung des Spindelteils in die Transportrichtung bewegt. Hierdurch werden wiederum die mit dem Gegenrad gekoppelten Transportmittel in eine Rotationsbewegung versetzt, welche die gewünschte Bewegung des Transportgutes in die Transportrichtung bewirkt.

Die Transportvorrichtung umfasst vorzugsweise mehrere der Transportmittel, welche an verschiedenen Positionen entlang der Transportrichtung angeordnet sind. Hierbei ist für jede der Positionen ein Spindelteil vorgesehen, weiches an einer entsprechenden Position der Antriebswelle angeordnet ist. Hierdurch können die Transportmittel entlang des Transportweges angeordnet und durch einen gemeinsamen Antrieb betätigt werden, so dass ein zuverlässiger Transport des Transportgutes über den gesamten Transportweg gewährleistet ist.

Bei beidseitig des Transportweges angeordneten Transportmitteln, d.h. wenn sich an einer bestimmten Position des Transportweges Transportmittel vertikal oberhalb des Transportweges und vertikal unterhalb des Transportweges befinden, befindet sich eine Drehachse des mindestens einen Spindelteils in der vertikalen Richtung zwischen der Drehachse der Transportmittel auf der ersten Seite des Transportweges und der Drehachse der Transportmittel auf der zweiten Seite des Transportweges. Auf diese Weise wird zum einen gewährleistet, dass für jede Seite des Transportweges die entsprechenden Gegenräder sich in ausreichendem Eingriff mit dem Spindelteil befinden. Zum anderen gewährleistet diese Anordnung direkt, dass sich die auf entgegengesetzten Seiten des Transportweges angeordneten Gegenräder, d.h. das erste und das zweite Gegenrad, in entgegengesetzte Richtungen drehen, so dass sich auch die damit gekoppelten Transportmittel in entgegengesetzte Richtungen drehen. Hierdurch gewährleisten die Transportmittel auf jeder Seite des Transportweges einen Transport in die gleiche Richtung, d.h. in die Transportrichtung.

Besonders vorteilhaft ist es, wenn auf einer Seite des Transportweges die Transportmittel beweglich gelagert sind und die Drehachse des mindestens einen Spindelteils um einen Anteil einer maximalen Verschiebung der beweglich gelagerten Transportmittel in der vertikalen Richtung in deren Richtung versetzt angeordnet ist. Dies bedeutet, dass sich die Achse des Spindelteils bezüglich des Transportweges auf der Seite der beweglich angeordneten Transportmittel befindet. Hierdurch wird der Bereich, um welchen sich die beweglich angeordneten Transportmittel vertikal bewegen können, ohne dass das entsprechende Gegenrad den Eingriff mit dem Spindelteil verliert, auf dieser Seite des Transportweges vergrößert.

Es ist weiterhin möglich, dass die Transportvorrichtung parallel zu den beschriebenen Transportmitteln auf jeweils derselben Seite des Transportweges angeordnete weitere Transportmittel umfasst, wobei die Transportvorrichtung in diesem Fall derart ausgestaltet ist, dass die weiteren Transportmittel durch die Rotationsbewegung der erfindungsgemäßen Transportmittel in eine Rotationsbewegung mit gleicher Rotationsrichtung versetzt werden. Auf diese Weise können auf einer Seite des Transportweges Transportmittel bereitgestellt werden, die miteinander in der vertikalen Richtung beweglich sein können und deren Rotationsbewegungen auf herkömmliche Weise miteinander verknüpft werden können. Da in diesem Fall eine vertikale Beweglichkeit der Transportmittel und der weiteren Transportmittel relativ zueinander nicht erforderlich ist, können die Rotationsbewegungen auf herkömmliche Art und Weise miteinander gekoppelt werden, z.B. durch Zahnradmittel. Derartige Zahnradmittel können beispielsweise durch auf den Achsen der Transportmittel angebrachte Zahnräder bereitgestellt sein, welche über ein Zwischenzahnrad miteinander gekoppelt sind. Das Zwischenzahnrad gewährleistet dabei, dass sich die auf derselben Seite des Transportweges nebeneinander angeordneten Transportmittel und weiteren Transportmittel in dieselbe Richtung drehen.

Die Transportmittel und/oder die weiteren Transportmittel können beispielsweise als sich in der lateralen Richtung erstreckende walzenförmige Transportmittel ausgestaltet sein. Alternativ ist es jedoch auch möglich, räder- oder rollenartige Transportmittel zu verwenden, bei welchen sich eine Kontaktfläche mit dem Transportgut nicht über die gesamte laterale Breite des Transportweges erstreckt. Eine solche Anordnung kann beispielsweise voneinander beabstandet auf einer gemeinsamen Achse angeordnete Transportscheiben umfassen. In dem Fall, dass die Transportvorrichtung mehrere der Transportmittel und/oder mehrere der weiteren Transportmittel umfasst, kann es dabei besonders vorteilhaft sein, dass die Transportscheiben von einander entlang der Transportrichtung benachbart angeordneten Transportmitteln und/oder weiteren Transportmitteln in der lateralen Richtung versetzt angeordnet sind, so dass sie sich in der lateralen Richtung nicht überschneiden. Hierdurch kann beispielsweise ein verbesserter Zugang von Behandlungsmedium zu dem Transportgut gewährleistet werden. Es kann ein gleichmäßiger Kontakt der Transportmittel und weiteren Transportmittel mit dem Transportgut gewährleistet werden, ohne dass bestimmte Bereiche des Transportgutes verstärkt durch die Transportmittel verdeckt werden. Weiterhin ist es in diesem Fall möglich, die räder- oder rollenartigen Transportmittel, welche benachbart angeordnet sind, sich in der Transportrichtung überschneidend auszugestalten. Hierdurch werden die Transporteigenschaften insbesondere bei dünnem Transportgut verbessert.

Die Steigung der gewindeartigen Struktur des mindestens einen Spindelteils, die Ausdehnung des mindestens einen Spindelteils entlang seiner Drehachse und der radiale Abstand der Vorsprünge oder Nocken des mindestens einen Gegenrads von der Drehachse des Gegenrads sind vorzugsweise derart ausgestaltet, dass sich für eine bestimmte Drehgeschwindigkeit des mindestens einen Spindelteils eine gewünschte Transportgeschwindigkeit der Transportmittel ergibt. Bei der Gestaltung des Spindelteils oder der Spindelteile und des Gegenrads oder der Gegenräder muss außerdem darauf geachtet werden, dass die Steigung der gewindeartigen Struktur des Spindelteils im Verhältnis zu dessen Durchmesser nicht zu hoch gewählt werden darf. Es muss mindestens immer ein Vorsprung des Gegenrads in das Spindelteil eingreifen können, um eine kontinuierliche gleichmäßige Drehbewegung zu gewährleisten. Für eine gleichmäßige Bewegung ist es außerdem wichtig, dass mindestens ein vollständiger Gewindegang ausgebildet ist. Ferner sollte die Ausdehnung der Spindelscheibe in Richtung ihrer Drehachse nicht zu groß gewählt werden, da ansonsten die Gefahr besteht, dass mehrere Vorsprünge des Gegenrads, welche sich auf dem Gegenrad an unterschiedlichen Winkelpositionen befinden, die Bewegung des Spindelteils und des Gegenrads blockieren. Es ist daher bevorzugt, das Spindelteil mit einer im Vergleich zur radialen Position der Vorsprünge auf den Gegenrädern geringen Ausdehnung entlang seiner Drehachse auszuwählen und eine geringe Steigung der gewindeartigen Struktur vorzusehen. Wenn die Transportvorrichtung mehrere Transportmittel umfasst, ist es für einen gleichmäßigen Transport weiterhin von Vorteil, die Transportvorrichtung derart auszugestalten, dass sich für jedes der Transportmittel die gleiche Transportgeschwindigkeit ergibt. Hierfür stehen als Parameter neben der bereits beschriebenen Ausgestaltung der Gegenräder und Spindelteile auch die Durchmesser der Transportmittel selbst zur Verfügung.

Es kann weiterhin von Vorteil sein, den Durchmesser der Gegenräder mit den Vorsprüngen kleiner als den äußeren Durchmesser der Transportmittel zu gestalten. Hierdurch wird erreicht, dass sich benachbarte Gegenräder und die darauf vorgesehenen Vorsprünge nicht behindern, auch wenn der Abstand benachbarter Transportmittel geringer ist als der äußere Durchmesser der Transportmittel.

Als äußerer Durchmesser der Transportmittel ist hierbei der Durchmesser einer Fläche zu verstehen, welche von dem am weitesten von der Drehachse der Transportmittel entfernten Teil der Transportmittel bei deren Rotationsbewegung überstrichen wird. Dies bedeutet, dass in bestimmten Fällen eine nicht kreisförmige Querschnittsform der Transportmittel möglich sein kann. Beispielsweise können die Transportmittel mit Zähnen oder Vorsprüngen versehen sein, welche in das Transportgut eingreifen.

Die erfindungsgemäße Transportvorrichtung ist vorzugsweise zur Verwendung in einer Behandlungsanlage zum Transport von flachem Transportgut in Form von zu behandelnden Leiterplatten oder -folien zur nasschemischen oder elektrolytischen Behandlung derselben ausgestaltet. Eine solche Behandlungsanlage umfasst vorzugsweise eine erfindungsgemäße Transportvorrichtung.

Die vorliegende Erfindung ermöglicht eine verbesserte Anpassung der Transportvorrichtung an Variationen der Stärke des Transportgutes. Hierdurch wird ein zuverlässigerer und effektiverer Transport gewährleistet und Staus können vermieden werden. Die Anpassung an Variationen der Stärke des Transportgutes kann speziell durch eine bewegliche Lagerung von Transportmitteln auf einer Seite des Transportweges oder auf beiden Seiten des Transportweges erreicht werden. Die Erfindung ist besonders geeignet zum Einsatz in horizontal transportierenden nasschemischen Behandlungsanlagen, wie sie beispielsweise zur chemischen oder elektrolytischen Behandlung von Leiterplatten oder -folien verwendet werden. Die erhöhte Zuverlässigkeit der Transportvorrichtung gewährleistet bei solchen Anlagen, dass Staus vermieden werden und ein dadurch verursachter Ausschuss an Material gering gehalten wird.

Nachfolgend wird die Erfindung anhand von bevorzugten Ausführungsbeispielen unter Bezugnahme auf die beigefügten Zeichnungen näher erläutert.
Fig. 1 zeigt ausschnittweise eine Transportvorrichtung gemäß einem Ausführungsbeispiel der Erfindung.
Fig. 2 zeigt ausschnittweise die Transportvorrichtung von Fig. 1 in einer um 90° gedrehten Ansicht.
Fig. 3 zeigt eine Transportvorrichtung gemäß einem weiteren Ausführungsbeispiel der vorliegenden Erfindung.
Fig. 4 stellt ausschnittweise die Transportvorrichtung von Fig. 3 in einer um 90° gedrehten Ansicht dar.
Fig. 5 zeigt in gleicher Ansicht wie Fig. 4 eine Transportvorrichtung gemäß einem weiteren Ausführungsbeispiel der vorliegenden Erfindung mit modifizierter Lage der Drehachsen der Transportmittel.
Fig. 6 zeigt in gleicher Ansicht wie Fig. 4 eine Transportvorrichtung gemäß einem weiteren Ausführungsbeispiel der Erfindung mit einem vergrößerten Durchmesser des Spindelteils.
Fig. 7 zeigt eine Transportvorrichtung gemäß einem weiteren Ausführungsbeispiel der Erfindung, welche weitere Transportmittel umfasst.
Fig. 8 zeigt eine Querschnittsansicht einer horizontal transportierenden Behandlungsanlage mit einer Transportvorrichtung gemäß dem Stand der Technik.

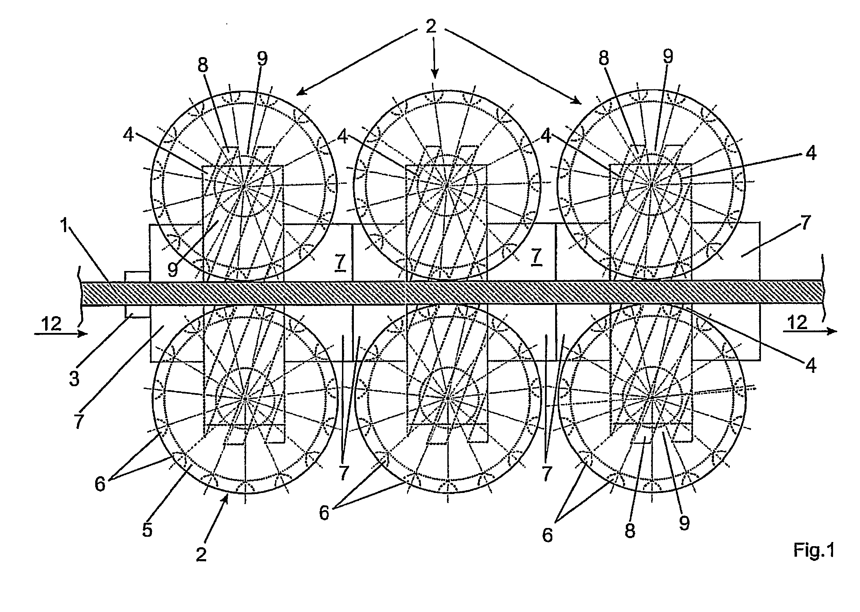

Fig. 1 zeigt eine Transportvorrichtung für eine Behandlungsanlage, ähnlich der, wie sie anhand von Fig. 8 für den Stand der Technik beschrieben wurde. Die Darstellung erfolgt dabei in einer Ebene parallel zu einer Transportrichtung, wie es in Fig. 8 durch die Linie A-A' angedeutet ist. Dargestellt ist lediglich ein Ausschnitt der Transportvorrichtung, d.h. von einer Vielzahl von Transportmitteln 2 der Transportvorrichtung sind in diesem Fall lediglich drei dargestellt.

Bei Fig. 1 sowie auch bei allen weiteren Figuren ist die Lagerung der Transportmittel an Gehäusewänden der Behandlungsanlage aus Gründen der Übersichtlichkeit nicht dargestellt. Diese erfolgt mittels Lagerbohrungen für die auf einer unteren Seite des Transportweges bzw. des Transportgutes angeordneten Transportmittel und mittels einer Langlochlagerung für die oberhalb des Transportweges angeordneten Transportmittel. Die Langlöcher erstrecken sich dabei in einer vertikalen Richtung senkrecht zu der Transportrichtung, so dass die oberen Transportmittel in dieser Richtung beweglich gelagert sind. Da die Lagerungen in der Behandlungsanlage mit einer Behandlungsflüssigkeit oder einem anderen Behandlungsmedium in Berührung kommen können, müssen sie diesem gegenüber beständig ausgestaltet sein. Hierbei hat sich zur Herstellung der Lager ein Kunststoff in Form von beispielsweise dem Niederdruck-Polyäthylen RCH1000^{™} gut bewährt.

Das Transportgut 1 in Form von zu behandelnden Leiterplatten oder -folien durchläuft die Anlage in einer durch Pfeile 12 angedeuteten Transportrichtung. Der Antrieb erfolgt über eine Antriebswelle 3, deren Achse entlang der Behandlungsanlage parallel zu der Transportrichtung verläuft. An Positionen, die mit Transportmitteln 2 versehen sind, ist auf der Antriebswelle 3 jeweils ein Spindelteil 4 starr mit der Antriebswelle 3 verbunden. Die Position der Spindelteile 4 auf der Antriebswelle 3 ist durch jeweils zwischen zwei Spindelteilen 4 angeordnete Abstandhalter 7 festgelegt. Auf der Achse der Transportmittel 2 sind jeweils ebenfalls starr damit verbunden Gegenräder 5 angebracht. Dies bedeutet, dass die Transportmittel 2 und die Gegenräder 5 miteinander rotieren. Jedes der Gegenräder 5 umfasst an seiner kreisförmigen Stirnfläche, welche von dem Transportweg des Transportgutes 1 abgewandt ist, Vorsprünge in Form von Nocken 6, welche sich in Richtung der Drehachse der Gegenräder 5, d.h. der Drehachse der Transportmittel 2, erstrecken. Die Nocken 6 sind an einer radialen Position, welche dem Durchmesser der walzenförmigen Transportmittel 2 entspricht, in gleichmäßigen Winkelabständen entlang des Umfangs des Gegenrads angeordnet. Einem Paar von Transportmitteln 2, d.h. einem an einer bestimmten Position in der Transportrichtung gelegenen Transportmittel 2 oberhalb des Transportweges und einem an der entsprechenden Position unterhalb des Transportweges gelegenen Transportmittel 2 ist jeweils eines der Spindelteile 4 zugeordnet. Die Spindelteile 4 sind im Wesentlichen zylinderförmig und mit einer gewindeartigen Struktur 8, 9 auf ihrer Außenfläche, d.h. der Mantelfläche des Zylinders versehen. Das einem Paar von Transportmitteln 2 zugeordnete Spindelteil 4 ist derart gegenüber den auf den Achsen der Transportmittel 2 angebrachten Gegenräder 5 angeordnet, dass sich die Nocken 6 auf den Stirnflächen der Gegenräder 5 im Eingriff mit der gewindeartigen Struktur 8 des Spindelteils 4 befinden. Dies bedeutet, dass sich für jedes der Gegenräder 5 zumindest eine der Nocken 6 im Eingriff mit der gewindeartigen Struktur 8, 9 des entsprechenden Spindelteils 4 befindet. Die gewindeartige Struktur der Spindelteile 4 umfasst dabei schraubenförmig ausgebildete Vorsprünge 8 mit dazwischen liegenden Nuten 9.

Durch eine Rotationsbewegung der Antriebswelle 3 und damit auch der Spindelteile 4 entsteht in der gewindeartigen Struktur 8, 9 eine Vorwärtsbewegung, durch welche die sich im Eingriff mit der gewindeartigen Struktur 8, 9 befindlichen Nocken mitbewegt werden. Hierdurch wird wiederum eine Rotationsbewegung der Gegenräder 5 hervorgerufen. Je geringer die Ausdehnung der Spindelteile 4 in Richtung ihrer Drehachse, d.h. in Richtung der Transportrichtung, desto gleichmäßiger ist die Vorwärtsbewegung der Nocken 6. Die Spindelteile 4 sind jedoch so breit ausgeführt, dass immer mindestens eine der Nocken 6 jedes Gegenrads 5 in die gewindeartige Struktur 8, 9 des entsprechenden Spindelteils 4 eingreift, damit die Bewegungsübertragung nicht unterbrochen wird. Weiterhin ist die Form der Nocken 6 so gewählt, dass die bei der Rotationsbewegung der Gegenräder 5 auftretende Winkelveränderung bezüglich der Ausrichtung der gewindeartigen Struktur 8, 9 nicht zu einem Verklemmen der Nocken 6 in der gewindeartigen Struktur 8, 9 führt. Wenn nur geringe Kräfte übertragen werden müssen, d.h. wenn der Antrieb leichtgängig ist, kann eine Steigung der gewindeartigen Struktur 8, 9 entsprechend größer gewählt werden.

Eine besonders gleichmäßige Rotationsbewegung der Gegenräder 5 und damit auch der Transportmittel 2 lässt sich mit Spindelteilen 4 erreichen, welche eine geringe Ausdehnung in der Transportrichtung und gleichzeitig eine kleine Steigung der gewindeartigen Struktur 8, 9 aufweisen. Dies ist darauf zurückzuführen, dass in diesem Fall die Nocken 6 sich innerhalb der gewindeartigen Struktur 8, 9 nahezu ausschließlich in die Transportrichtung, d.h. senkrecht zu der Drehachse der Gegenräder 5 und Transportmittel 2, bewegen. Mit einer kleinen Steigung der gewindeartigen Struktur 8, 9 ist eine entsprechend geringe Geschwindigkeit der auf die Gegenräder 5 übertragenen Rotationsbewegung verbunden. Dies kann durch eine entsprechend höhere Rotationsgeschwindigkeit der Antriebswelle 3 kompensiert werden.

Die gewindeartige Struktur 8, 9 der Spindelteile 4 vermittelt eine lineare Bewegung entlang der Transportrichtung. Die damit im Eingriff befindlichen Nocken 6 der Gegenräder 5 vollführen jedoch eine Bewegung auf einer Kreisbahn, d.h. um die Drehachse der Gegenräder 5 und Transportmittel 2 herum. Dies bedeutet, dass ein Eingriff der Nocken 6 in der gewindeartigen Struktur 8, 9 der Spindelteile 4 nur insofern möglich ist, wie die Kreisbewegung der Nocken 6 mit der linearen Bewegung der gewindeartigen Struktur 8, 9 kompatibel ist. Dies ist der Fall in einem Bereich, in welchem sich die Nocke 6 im Wesentlichen entlang der Transportrichtung bewegt, d.h. wenn die Tangente an den von der Nocke 6 beschriebenen Kreis am Ort der Nocke 6 im Wesentlichen parallel zur Transportrichtung liegt. Bei stärkeren Winkelabweichungen zwischen dieser Tangente und der Transportrichtung werden die Bewegungen zunehmend inkompatibel, so dass die Spindelteile 4 in der Transportrichtung nur eine bestimmte maximale Ausdehnung aufweisen dürfen. Mit zunehmender Winkelabweichung zwischen der Tangente und der Transportrichtung nimmt das auf die Nocke 6 übertragene Drehmoment ab. Weiterhin kann es, falls sich mehrere der Nocken 6 eines Gegenrades 5 gleichzeitig im Eingriff mit der gewindeartigen Struktur 8, 9 befinden, zu einem Verklemmen der Nocken 6 in der gewindeartigen Struktur 8, 9 kommen. Dieses wird durch eine entsprechend begrenzte Ausdehnung der Spindelteile 4 entlang der Transportrichtung vermieden.

Der Querschnitt der Nocken 6 in einer Ebene senkrecht zur Drehachse der Gegenräder ist derart gestaltet, dass eine möglichst gute Führung der Nocken 6 ohne Risiko eines Verklemmens gewährleistet ist. Hierfür kann die Querschnittsform im Wesentlichen kreisförmig sein oder sich aus Kreissegmenten zusammensetzen.

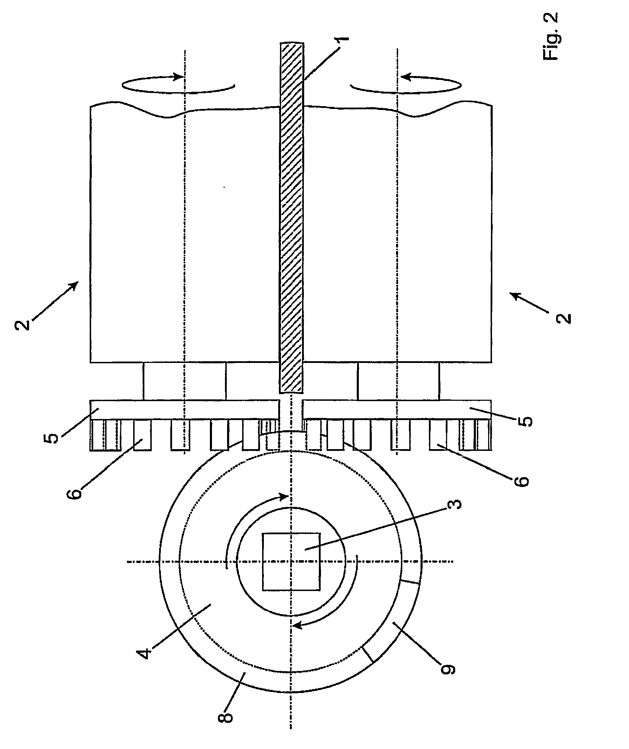

Fig. 2 zeigt eine gegenüber Fig. 1 um 90° gedrehte Seitenansicht. In diesem Fall erstreckt sich die Transportrichtung des Transportgutes 1 aus der Zeichnungsebene heraus. Die Darstellung von Fig. 2 lässt gut erkennen, wie die Nocken 6 in die gewindeartige Struktur 8, 9 der Spindelteile 4 eingreifen. Es ist erkennbar, dass die Größenverhältnisse der Gegenräder 5 und der Spindelteile 4 derart gewählt sind, dass sich nur diejenigen Nocken 6, welche sich auf Höhe der Drehachse der Spindelteile 4 befinden, im Eingriff mit der gewindeartigen Struktur 8, 9 der Spindelteile 4 sind.

Es ist weiterhin erkennbar, dass die Antriebswelle 3 im Bereich des Spindelteils 4 eine mehrkantige äußere Form aufweist. Hierdurch ist gewährleistet, dass das auf der Antriebswelle 3 angebrachte Spindelteil 4 ohne nennenswertes Spiel mit der Antriebswelle 3 rotiert. Alternativ kann die Antriebswelle 3 einen runden Querschnitt mit Keilnut aufweisen. Die mehrkantige äußere Form kann wie dargestellt vierkantig oder aber auch sechseckig, achteckig oder zahnradförmig sein. Das Spindelteil kann auf die Antriebswelle aufgesteckt und verschraubt oder aufgepresst sein. Es sind jedoch auch vielfältige andere starre Anbringungsmöglichkeiten denkbar.

Weiterhin ist in Fig. 2 erkennbar, dass, wenn ein dickeres Transportgut 1 durch den Transportweg geführt wird und dadurch die oberen Transportmittel 2 in der vertikalen Richtung nach oben verschoben werden, dies kaum zu Veränderungen hinsichtlich des Eingriffs der Nocken 6 in die gewindeartige Struktur 8, 9 der Spindelteile 4 führt. Auch ist erkennbar, dass die Gegenräder 5 im Wesentlichen den gleichen Durchmesser wie die walzenförmigen Transportmittel 2 aufweisen und dass die Nocken 6 an einer dem Durchmesser der Transportmittel 2 entsprechenden radialen Position außen entlang des Umfangs der Gegenräder 5 angeordnet sind. Hierdurch wird ein größtmöglicher Eingriff der Nocken 6 in die gewindeartige Struktur 8, 9 der Spindelteile 4 erreicht. Die Drehachse der Spindelteile 4, d.h. die Antriebswelle 3, befindet sich in diesem Fall auf einer Höhe mit der Ebene des Transportgutes 1 und dadurch in der vertikalen Richtung ungefähr mittig zwischen den Drehachsen der Gegenräder 5 und der Transportmittel 2.

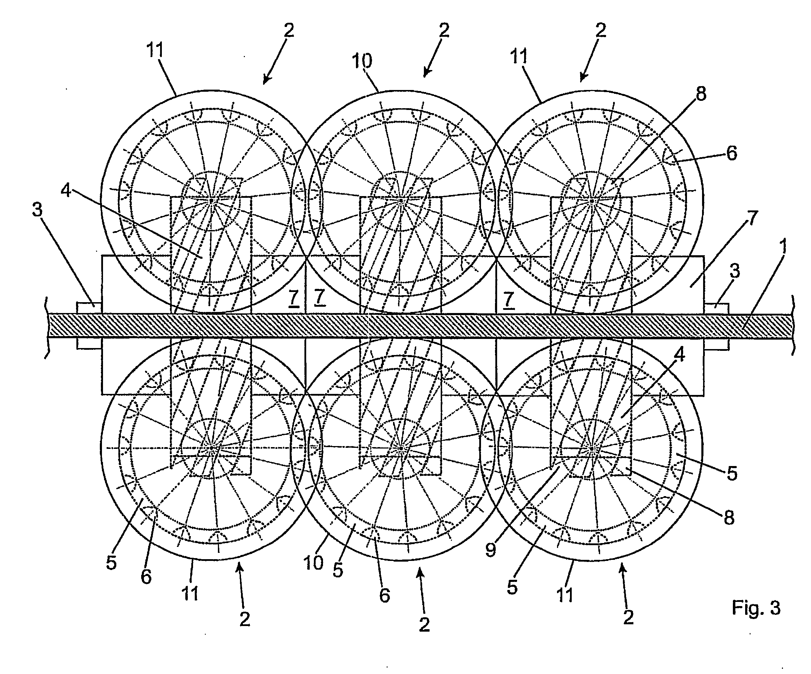

Fig. 3 zeigt ein weiteres Beispiel einer Transportvorrichtung, wobei im Unterschied zu Fig. 1 und 2 die Transportmittel 2 nicht walzenförmig, sondern räder- oder rollenförmig ausgestaltet sind. Dies ist dann von besonderem Vorteil, wenn besonders dünnes Transportgut 1 transportiert werden soll. Bei diesem besteht z.B. die Gefahr, dass es durch einen Flüssigkeitsfilm an den walzenförmigen Transportmitteln 2, wie sie zuvor erläutert wurden, anhaften und dadurch vom Transportweg abgelenkt werden könnte.

Aus diesem Grund sind bei der Transportvorrichtung von Fig. 3 die Transportmittel 2 mit räder- oder rollenartigen Transportscheiben 10, 11 versehen. Die Transportscheiben 10, 11 sind entlang der Drehachsen der Transportmittel 2 voneinander beabstandet bezüglich von benachbarten Transportmitteln 2 versetzt angeordnet. Aus diesem Grund kann, wie in Fig. 3 dargestellt, der Abstand von benachbarten Transportmitteln 2 entlang der Transportrichtung weniger betragen als der Durchmesser der Transportmittel 2. Dies bedeutet, dass entlang der Transportrichtung Bereiche ausgebildet sind, in welchen sich benachbarte Transportmittel 2 überschneiden. Die übrigen Bestandteile der Transportvorrichtung entsprechen im Wesentlichen denen der Transportvorrichtung von Fig. 1 und 2. Auf eine erneute Erläuterung dieser Elemente, welche mit gleichen Bezugszeichen bezeichnet sind, wird im Folgenden verzichtet.

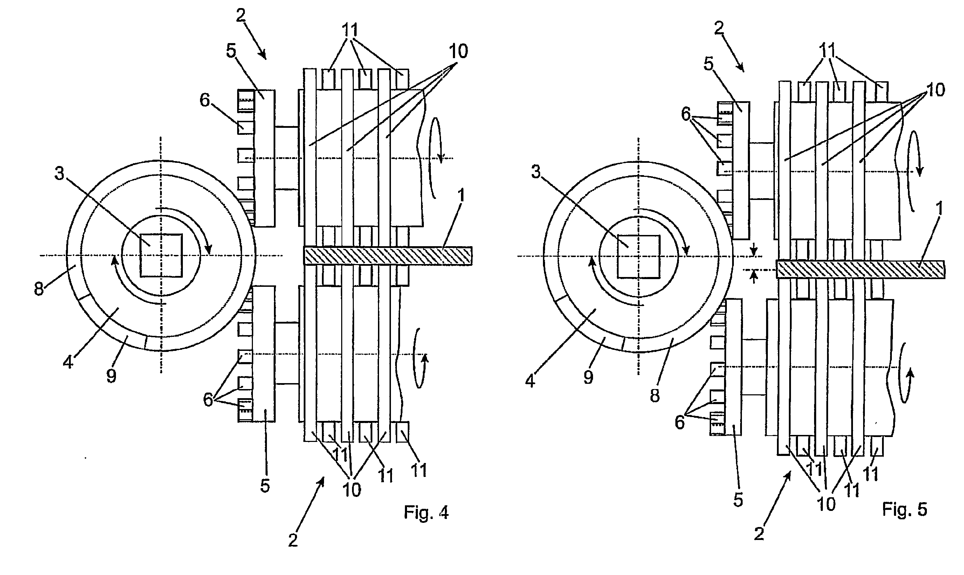

Fig. 4 zeigt die Transportvorrichtung von Fig. 3 in einer Fig. 2 entsprechenden, um 90° horizontal gedrehten Ansicht. Im Gegensatz zu der Transportvorrichtung von Fig. 2 weisen die Gegenräder 5 hier einen Durchmesser auf, welcher geringer ist als der äußere Durchmesser der Transportmittel 2, d.h. der äußere Durchmesser der Transportscheiben 10, 11. Ein zwischen den Transportscheiben 10, 11 ausgebildeter Walzenbereich der Transportmittel 2 weist einen geringeren Durchmesser als die Transportscheiben 10, 11 auf und entspricht im Wesentlichen dem Durchmesser der Gegenräder 5.

Wie aus Fig. 3 und 4 ersichtlich ist, sind die Transportscheiben 10, 11 von einander entlang der Transportrichtung benachbart angeordneten Transportmitteln derart gegeneinander versetzt angeordnet, dass die versetzt angeordneten Transportscheiben 10, 11 sich in der Transportrichtung überschneiden. Dies bedeutet, dass die Transportscheiben 11 in der lateralen Richtung zwischen den Transportscheiben 10 angeordnet sind. Hierfür ist der Abstand der Transportscheiben 10. 11 auf der Achse der Transportmittel 2 größer gewählt als ihre laterale Ausdehnung, d.h. der Dicke. Durch das Überschneiden wird erreicht, dass sehr dünnes Transportgut 1, welches von dem Transportweg abgelenkt wird, z.B. durch den Druck des darauf gestrahlten oder gesprühten Behandlungsmediums, durch die benachbarten, eng beieinander angeordneten, Transportscheiben 10, 11 wieder zurück auf den Transportweg gelenkt wird.

Wie aus Fig. 4 ersichtlich ist, greifen die Nocken 6 der Gegenräder 5 im Vergleich zu der Transportvorrichtung von Fig. 1 und 2 weiter von der Ebene des Transportgutes 1 entfernt in die gewindeartige Struktur 8, 9 der entsprechenden Spindelteile 4 ein. Hieraus ergibt sich eine gegenüber der Transportvorrichtung von Fig. 1 und 2 herabgesetzte vertikale Verschiebbarkeit der oberen Transportmittel 2.

Eine weitere Transportvorrichtung ist in Fig. 5 dargestellt. Die Transportvorrichtung von Fig. 5 entspricht im Wesentlichen der Transportvorrichtung von Fig. 3 und 4.

Um jedoch der herabgesetzten vertikalen Verschiebbarkeit des oberen Transportmittels 2 entgegenzuwirken, ist, anders als bei den vorhergehend beschriebenen Transportvorrichtungen, die Drehachse der Spindelteile 4 um einen bestimmten Betrag vertikal nach oben versetzt angeordnet. Wie aus Fig. 5 ersichtlich ist, wird hierdurch der Eingriff der Gegenräder 5 der Transportmittel 2 auf der oberen Seite des Transportweges bzw. der Ebene des Transportgutes 1, d.h. auf der Seite des beweglich gelagerten Transportmittels 2, zu Lasten des Eingriffs der Gegenräder 5 der Transportmittel 2 auf der unteren Seite des Transportweges verbessert. Da jedoch das Transportmittel 2 auf der unteren Seite des Transportweges nicht beweglich gelagert ist, ist hier der Eingriff zwischen den Nocken 6 der Gegenräder 5 und der gewindeartigen Struktur 8, 9 des Spindelteils 4 nicht kritisch. Somit kann, da sich Variationen in der Stärke des Transportgutes 1 nur auf die Position der oberen Gegenräder 5 auswirken und für dieses der Spielraum hinsichtlich des Eingriffs der Nocken 6 mit der gewindeartigen Struktur 8, 9 der Spindelteile 4 verbessert wurde, insgesamt eine verbesserte Toleranz gegenüber Variationen der Stärke des Transportgutes 1 erreicht werden.

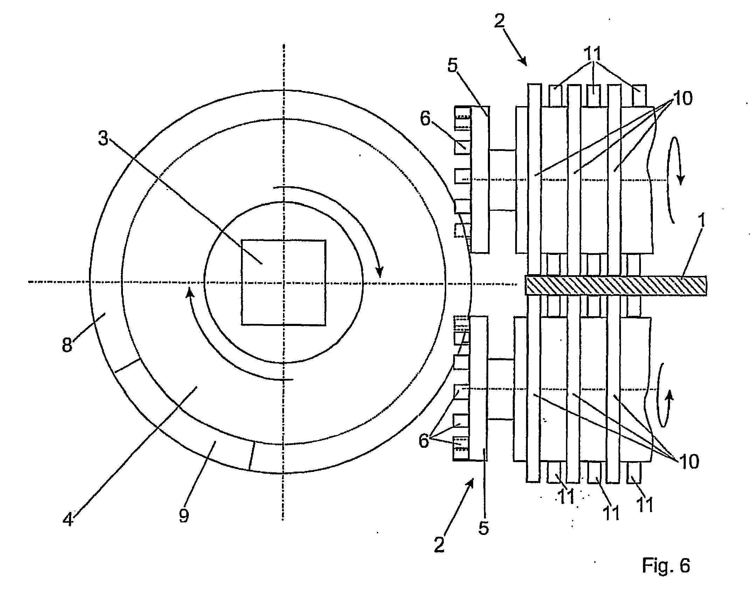

Eine weitere Möglichkeit, den vertikalen Verstellbereich, in welchem ein zuverlässiger Eingriff der Nocken 6 in die gewindeartige Struktur 8, 9 der Spindelteile 4 gewährleistet ist, zu vergrößern, besteht darin, den Außendurchmesser der Spindelteile 4 zu vergrößern. Dies ist in Fig. 6 dargestellt. Im Übrigen entspricht die in Fig. 6 dargestellte Transportvorrichtung dem in Fig. 2 und 3 dargestellten Beispiel.

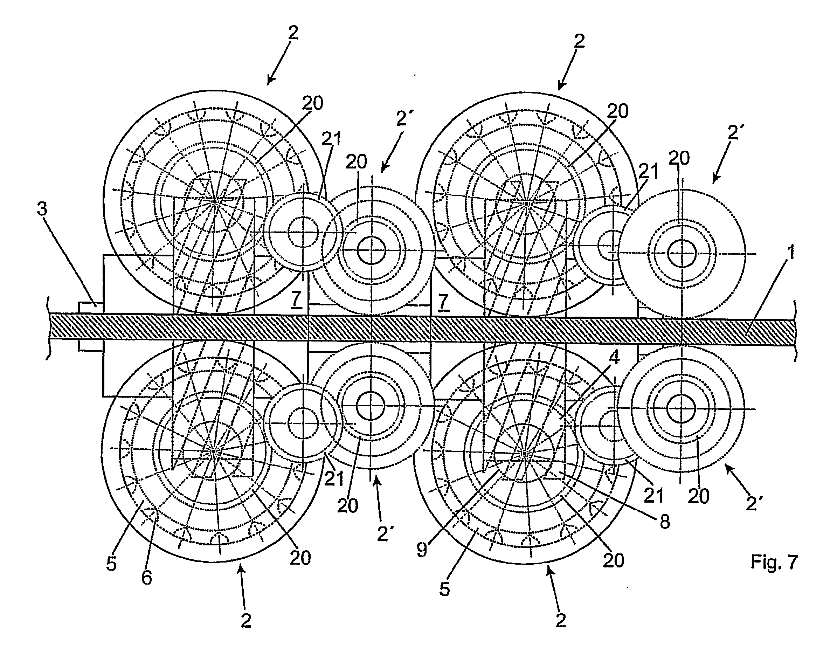

In Fig. 7 ist ein weiteres Beispiel für eine Transportvorrichtung dargestellt. Wie die Transportvorrichtung von Fig. 2 und 3 umfasst die Transportvorrichtung von Fig. 7 Transportmittel 2 mit Transportscheiben. Die mit den Gegenrädern 5 versehenen und über die Spindelteile 4 angetriebenen Transportmittel 2 sind jedoch nicht ineinander greifend angeordnet, sondern in einem bestimmten Abstand voneinander entlang der Transportrichtung positioniert. Neben den Transportmitteln 2 sind achsenparallel dazu weitere Transportmittel 2' angeordnet. Die weiteren Transportmittel 2' weisen bei dem gezeigten Beispiel einen geringeren Durchmesser als die Transportmittel 2 auf. Die weiteren Transportmittel 2' sind ebenfalls mit Transportscheiben versehen und die Abstände und Durchmesser der Transportmittel 2 und weiteren Transportmittel 2' sind derart ausgestaltet, dass wiederum eine sich überschneidende Anordnung der Transportscheiben benachbarter Transportmittel 2 und weiterer Transportmittel 2', ähnlich wie in Fig. 3 dargestellt, erreicht wird.

Die Transportvorrichtung ist derart ausgestaltet, dass eine Rotationsbewegung der weiteren Transportmittel 2' jeweils mit der Rotationsbewegung eines der Transportmittel 2 auf derselben Seite des Transportweges gekoppelt ist. Dies ist hier dadurch bewerkstelligt, dass zwischen dem Transportmittel 2 und dem weiteren Transportmittel 2' Zahnradmittel vorgesehen sind. Die Zahnradmittel umfassen Zahnräder 20, welche mit den Drehachsen der Transportmittel 2 und der weiteren Transportmittel 2' starr und konzentrisch verbunden sind. Die Zahnräder 20 sind über ein Zwischerizahnrad 21 miteinander gekoppelt. Dies bedeutet, dass ein Zahnrad 20 der Transportmittel 2 mit einem entsprechenden Zwischenzahnrad 21 in Eingriff steht und dieses in eine Rotationsbewegung versetzt. Das Zwischenzahnrad 21 steht wiederum mit einem Zahnrad 20 der entsprechenden weiteren Transportmittel 2' in Eingriff und versetzt dadurch die weiteren Transportmittel 2' in eine Rotationsbewegung, welche mit der Rotationsbewegung der Transportmittel 2 gleich gerichtet ist. Da jeweils nur' Transportmittel 2 und weitere Transportmittel 2', welche auf derselben Seite des Transportweges angeordnet sind, miteinander gekoppelt sind, ist hierdurch die vertikale Verschiebbarkeit der Transportmittel 2 auf der oberen Seite des Transportweges nicht beeinträchtigt. Es versteht sich, dass die weiteren Transportmittel 2' auf der oberen Seite des Transportweges ebenfalls vertikal verschiebbar gelagert sind. Die Zwischenzahnräder 21 sind bei diesem Beispiel erforderlich, um zu gewährleisten, dass sich die Transportmittel 2 und die weiteren Transportmittel 2' in dieselbe Richtung drehen.

Die Drehgeschwindigkeit der Transportmittel 2' ist wegen des unterschiedlichen Durchmessers nicht die gleiche wie bei den Transportmitteln 2. Die andere Drehgeschwindigkeit der Transportmittel 2' wird durch die Übersetzung der Zahnräder 20 eingestellt. Die Umfangsgeschwindigkeit des auf dem Transportgut 1 abrollenden Umfanges der Transportmittel 2 und 2' ist dadurch trotz unterschiedlicher Durchmesser gleich.

Abweichend von den oben beschriebenen Beispielen sind verschiedene Modifikationen möglich. Insbesondere ist es möglich, Merkmale der verschiedenen Beispiele miteinander zu kombinieren. So können z.B. walzenförmige Transportmittel mit Transportmitteln, welche auf den Transportscheiben basieren, kombiniert werden. Weiterhin wäre es möglich, die weiteren Transportmittel als walzenförmige Transportmittel auszugestalten. Auch ist es nicht zwingend erforderlich, dass die Transportmittel beidseitig des Transportweges vorgesehen sind. Die beschriebene Transportvorrichtung mit Antriebsmitteln, welche auf einem Spindelteil und einem Gegenrad mit Nocken basieren, kann bereits bei einem einzelnen Transportmittel 2, welches beweglich gelagert ist, vorteilhaft eingesetzt werden.

### Bezugszeichenliste

- 1: Transportgut
- 2, 2': Transportmittel
- 3: Antriebswelle
- 4: Spindelteil
- 5: Gegenrad
- 6: Nocke
- 7: Abstandshalter
- 8: Vorsprung der gewindeartigen Struktur
- 9: Nut der gewindeartigen Struktur
- 10: Transportscheiben
- 11: versetzte Transportscheiben
- 12: Transportrichtung
- 13: Behälterunterbau
- 14: Seitenwände
- 15: Boden
- 16: abnehmbarer Deckel
- 17: Behandlungszone
- 18: Kegelrad
- 19: Gegenkegelrad
- 20: Zahnrad
- 21: Zwischenzahnrad

## Patentansprüche

1. Transportvorrichtung, umfassend
drehbar gelagerte Transportmittel (2) zum Bewegen eines Transportgutes (1) in eine Transportrichtung, und
Antriebsmittel (3, 4, 5), welche die Transportmittel (2) in eine Rotationsbewegung versetzen, so dass das Transportgut (1) durch die Rotationsbewegung in die Transportrichtung bewegt wird,
wobei die Transportmittel (2) bezüglich eines Transportweges des Transportgutes derart angeordnet sind, dass sie mit dem Transportgut (1) in Kontakt geraten, wenn dieses den Transportweg durchläuft, und
wobei sich eine Drehachse der Transportmittel (2) in einer lateralen Richtung senkrecht zu der Transportrichtung erstreckt,
**dadurch gekennzeichnet,**
**dass** mindestens ein zylinderartig geformtes Spindelteil (4), welches auf einer Außenfläche eine gewindeartige Struktur (8) aufweist, und mindestens ein Rotationsmittel (5) mit entlang seines Umfangs angeordneten, sich in Richtung einer Drehachse des Rotationsmittels erstreckenden Vorsprüngen (6) vorgesehen sind, wobei sich mindestens einer der Vorsprünge (6) in Eingriff mit der gewindeartigen Struktur (8) des Spindelteils (4) befindet, so dass eine Rotationsbewegung des Spindelteils (4) in eine Rotationsbewegung des Rotationsmittels (5) umgesetzt wird, wobei die Rotationsbewegung des Rotationsmittels (5) mit der Rotationsbewegung der Transportmittel (2) gekoppelt ist.

2. Transportvorrichtung nach Anspruch 1,
**dadurch gekennzeichnet,**
**dass** die Transportmittel (2) beidseitig des Transportweges angeordnet sind, wobei die Transportmittel (2) auf mindestens einer Seite des Transportweges in der vertikalen Richtung beweglich gelagert sind, wobei ein erstes Rotationsmittel (5), dessen Rotationsbewegung mit der Rotationsbewegung von auf einer ersten Seite des Transportweges angeordneten Transportmitteln (2) gekoppelt ist, entlang seines Umfangs angeordnete, sich in Richtung seiner Drehachse erstreckende Vorsprünge umfasst (6), von welchen sich mindestens einer in Eingriff mit der gewindeartigen Struktur (8) des mindestens einen Spindelteils (4) befindet, und wobei ein zweites Rotationsmittel (5), dessen Rotationsbewegung mit der Rotationsbewegung von auf einer, der ersten Seite entgegengesetzten, zweiten Seite des Transportweges angeordneten Transportmittel (2) gekoppelt ist, entlang seines Umfangs angeordnete, sich in Richtung seiner Drehachse erstreckende Vorsprünge (6) umfasst, von welchen sich mindestens einer in Eingriff mit der gewindeartigen Struktur (8) des mindestens einen Spindelteils (4) befindet.

3. Transportvorrichtung nach Anspruch 1 oder 2,
**dadurch gekennzeichnet,**
**dass** das mindestens eine Spindelteil (4) auf einer parallel zu der Transportrichtung verlaufenden Antriebswelle (3) angeordnet ist, so dass es zusammen mit dieser rotiert.

4. Transportvorrichtung nach Anspruch 3,
**dadurch gekennzeichnet,**
**dass** die Transportvorrichtung mehrere der Transportmittel (2) umfasst, welche an Positionen entlang der Transportrichtung angeordnet sind, wobei für jede Position ein Spindelteil (4) vorgesehen ist, welches an einer entsprechenden Position der Antriebswelle (3) angeordnet ist.

5. Transportvorrichtung nach einem der vorhergehenden Ansprüche,
**dadurch gekennzeichnet,**
**dass** das Rotationsmittel (5) und das Transportmittel (2), deren Rotationsbewegungen miteinander gekoppelt sind, miteinander rotierend auf einer gemeinsamen Achse angebracht sind.

6. Transportvorrichtung nach Anspruch 2 und einem der vorhergehenden Ansprüche,
**dadurch gekennzeichnet,**
**dass** eine Drehachse des mindestens einen Spindelteils (4) sich in der vertikalen Richtung zwischen der Drehachse des ersten Rotationsmittels (5) der Transportmittel (2) auf der ersten Seite des Transportweges und der Drehachse des zweiten Rotationsmittels (5) der Transportmittel (2) auf der zweiten Seite des Transportweges befindet.

7. Transportvorrichtung nach Anspruch 6,
**dadurch gekennzeichnet,**
**dass** mindestens auf einer Seite des Transportweges die Transportmittel (2) beweglich gelagert sind, und
**dass** die Drehachse des mindestens einen Spindelteils (4) um einen Anteil einer maximalen Verschiebung der beweglich gelagerten Transportmittel (2) in der vertikalen Richtung in deren Richtung versetzt angeordnet ist.

8. Transportvorrichtung nach einem der vorhergehenden Ansprüche,
**dadurch gekennzeichnet,**
**dass** die Transportvorrichtung zu den Transportmitteln (2) jeweils auf derselben Seite des Transportweges angeordnete weitere drehbar gelagerte Transportmittel (2') umfasst, deren Drehachse parallel zu der Drehachse der Transportmittel (2) angeordnet ist, wobei die Transportvorrichtung derart ausgestaltet ist, dass die weiteren Transportmittel (2') durch die Rotationsbewegung der Transportmittel (2) in eine Rotationsbewegung mit gleicher Rotationsrichtung versetzt werden.

9. Transportvorrichtung nach Anspruch 8,
**dadurch gekennzeichnet,**
**dass** die Transportvorrichtung Zahnradmittel umfasst, welche die Rotationsbewegung der Transportmittel (2) in die Rotationsbewegung der weiteren Transportmittel (2') umsetzen.

10. Transportvorrichtung nach Anspruch 8 oder 9,
**dadurch gekennzeichnet,**
**dass** die weiteren Transportmittel (2') als sich in der lateralen Richtung erstreckende walzenförmige Transportmittel ausgestaltet sind.

11. Transportvorrichtung nach einem der Ansprüche 8 bis 10,
**dadurch gekennzeichnet,**
**dass** die weiteren Transportmittel (2') Transportscheiben (10, 11) umfassen, welche voneinander beabstandet auf einer gemeinsamen Achse angeordnet sind.

12. Transportvorrichtung nach einem der vorhergehenden Ansprüche,
**dadurch gekennzeichnet,**
**dass** die Transportmittel (2) als sich in der lateralen Richtung erstreckende walzenförmige Transportmittel ausgestaltet sind.

13. Transportvorrichtung nach einem der vorhergehenden Ansprüche,
**dadurch gekennzeichnet,**
**dass** die Transportmittel (2) Transportscheiben (10, 11) umfassen, welche voneinander beabstandet auf einer gemeinsamen Achse angeordnet sind.

14. Transportvorrichtung nach Anspruch 11 oder Anspruch 13,
**dadurch gekennzeichnet,**
**dass** in der Transportrichtung benachbarte Transportscheiben (10, 11) in der lateralen Richtung versetzt angeordnet sind.

15. Transportvorrichtung nach Anspruch 14,
**dadurch gekennzeichnet,**
**dass** die Transportscheiben (10, 11) in der Transportrichtung derart voneinander beabstandet angeordnet sind, dass in der Transportrichtung benachbart angeordnete Transportscheiben sich in der Transportrichtung überschneiden.

16. Transportvorrichtung nach einem der vorhergehenden Ansprüche,
**dadurch gekennzeichnet,**
**dass** eine Steigung der gewindeartigen Struktur (8, 9), die Ausdehnung des mindestens einen Spindelteils (4) entlang seiner Drehachse und der radialen Abstand der Vorsprünge (6) des mindestens einen Rotationsmittels (5) von der Drehachse des Rotationsmittels (5) derart ausgestaltet sind, dass sich für eine bestimmte Drehgeschwindigkeit des mindestens einen Spindelteils (4) eine gewünschte Transportgeschwindigkeit der Transportmittel (2) ergibt.

17. Transportvorrichtung nach einem der vorhergehenden Ansprüche,
**dadurch gekennzeichnet,**
**dass** die Transportvorrichtung mehrere der Transportmittel (2) umfasst, und
**dass** die Transportvorrichtung derart ausgestaltet ist, dass sich für jedes der Transportmittel (2) die gleiche Transportgeschwindigkeit ergibt.

18. Transportvorrichtung nach einem der vorhergehenden Ansprüche,
**dadurch gekennzeichnet,**
**dass** die Transportmittel (2) in einer vertikalen Richtung senkrecht zu der Transportrichtung beweglich gelagert sind, um sich Variationen in der Stärke des Transportgutes (1) in der vertikalen Richtung anpassen zu können.

19. Transportvorrichtung nach einem der vorhergehenden Ansprüche,
**dadurch gekennzeichnet,**
**dass** die Transportvorrichtung zum Transport von platten- oder folienartigem Transportgut (1) ausgestaltet ist.

20. Transportvorrichtung nach einem dem der vorhergehenden Ansprüche,
**dadurch gekennzeichnet,**
**dass** die Transportvorrichtung zur Verwendung in einer nasschemischen oder elektrolytischen Behandlungsanlage ausgestaltet ist.

21. Behandlungsanlage zur nasschemischen oder elektrolytischen Behandlung eines Werkstücks mit einer Transportvorrichtung nach einem der vorhergehenden Ansprüche.

## Claims

1. Conveying device, comprising
rotatably mounted conveying means (2) for moving in a conveying direction a commodity to be conveyed (1), and drive means (3, 4, 5) which impart a rotational movement to the conveying means (2), so that the commodity to be conveyed (1) is moved by the rotational movement in the conveying direction,
the conveying means (2) being arranged, with respect to a conveying path of the stock to be conveyed, in such a way that they come into contact with the commodity to be conveyed (1) when the latter passes through the conveying path, and
an axis of rotation of the conveying means (2) extending in a lateral direction perpendicular to the conveying direction,
**characterised in that** at least one cylindrically shaped spindle member (4) with a thread-like structure (8) on an outer surface and at least one rotation means (5) with projections (6) arranged along its periphery and extending in the direction of an axis of rotation of the rotation means are provided, at least one of the projections (6) being in engagement with the thread-like structure (8) of the spindle member (4), so that a rotational movement of the spindle member (4) is converted into a rotational movement of the rotation means (5), the rotational movement of the rotation means (5) being coupled to the rotational movement of the conveying means (2).

2. Conveying device according to Claim 1,
**characterised in that** the conveying means (2) are arranged on both sides of the conveying path, the conveying means (2) on at least one side of the conveying path being mounted in a manner movable in the vertical direction, a first rotation means (5), the rotational movement of which is coupled to the rotational movement of conveying means (2) arranged on a first side of the conveying path, comprising projections (6) which are arranged along its periphery and extend in the direction of its axis of rotation and of which at least one is in engagement with the thread-like structure (8) of the at least one spindle member (4), and a second rotation means (5), the rotational movement of which is coupled to the rotational movement of conveying means (2) arranged on a second side, opposite the first side, of the conveying path, comprising projections (6) which are arranged along its periphery and extend in the direction of its axis of rotation and of which at least one is in engagement with the thread-like structure (8) of the at least one spindle member (4).

3. Conveying device according to Claim 1 or 2,
**characterised in that** the at least one spindle member (4) is arranged on a drive shaft (3) running parallel to the conveying direction, so that it rotates together with the drive shaft.

4. Conveying device according to Claim 3,
**characterised in that** the conveying device comprises a plurality of conveying means (2) which are arranged at positions along the conveying direction, there being provided for each position a spindle member (4) which is arranged at a corresponding position of the drive shaft (3).

5. Conveying device according to one of the preceding claims,
**characterised in that** the rotation means (5) and the conveying means (2), the rotational movements of which are coupled to one another, are mounted in a manner rotating with one another on a common axis.

6. Conveying device according to Claim 2 and one of the preceding claims,
**characterised in that** an axis of rotation of the at least one spindle member (4) is situated in the vertical direction between the axis of rotation of the first rotation means (5) of the conveying means (2) on the first side of the conveying path and the axis of rotation of the second rotation means (5) of the conveying means (2) on the second side of the conveying path.

7. Conveying device according to Claim 6,
**characterised in that** the conveying means (2) are movably mounted at least on one side of the conveying path, and **in that** the axis of rotation of the at least one spindle part (4) is arranged in a manner offset, by a proportion of a maximum displacement of the movably mounted conveying means (2) in the vertical direction, in this direction.

8. Conveying device according to one of the preceding claims,
**characterised in that** the conveying device comprises, arranged parallel to the conveying means (2) and in each case on the same side of the conveying path, further rotatably mounted conveying means (2), the axis of rotation of which is arranged parallel to the axis of rotation of the conveying means (2), the conveying device being configured in such a way that the rotational movement of the conveying means (2) imparts a rotational movement with the same direction of rotation to the further conveying means (2').

9. Conveying device according to Claim 8,
**characterised in that** the conveying device comprises toothed-wheel means which convert the rotational movement of the conveying means (2) into the rotational movement of the further conveying means (2').

10. Conveying device according to Claim 8 or 9,
**characterised in that** the further conveying means (2') are designed as roll-shaped conveying means extending in the lateral direction.

11. Conveying device according to one of Claims 8 to 10,
**characterised in that** the further conveying means (2') comprise conveying discs (10, 11) which are arranged in a manner spaced apart on a common axis.

12. Conveying device according to one of the preceding claims,
**characterised in that** the conveying means (2) are configured as roll-shaped conveying means extending in the lateral direction.

13. Conveying device according to one of the preceding claims,
**characterised in that** the conveying means (2) comprise conveying discs (10, 11) which are arranged in a manner spaced apart on a common axis.

14. Conveying device according to Claim 11 or Claim 13,
**characterised in that** conveying discs (10, 11) adjacent in the conveying direction are arranged in a manner offset in the lateral direction.

15. Conveying device according to Claim 14,
**characterised in that** the conveying discs (10, 11) are arranged in a manner spaced apart in the conveying direction such that conveying discs arranged adjacently in the conveying direction overlap in the conveying direction.

16. Conveying device according to one of the preceding claims,
**characterised in that** a pitch of the thread-like structure (8, 9), the extent of the at least one spindle member (4) along its axis of rotation and the radial spacing of the projections (6) of the at least one rotation means (5) from the axis of rotation of the rotation means (5) are configured in such a way that, for a given rotating speed of the at least one spindle part (4), a desired conveying speed of the conveying means (2) results.

17. Conveying device according to one of the preceding claims,
**characterised in that** the conveying device comprises a plurality of the conveying means (2), and **in that** the conveying device is designed in such a way that, for each of the conveying means (2), the same conveying speed results.

18. Conveying device according to one of the preceding claims,
**characterised in that** the conveying means (2) are mounted in a manner movable in a vertical direction perpendicular to the conveying direction, in order to be able to adapt to variations in the thickness of the commodity to be conveyed (1), in the vertical direction.

19. Conveying device according to one of the preceding claims,
**characterised in that** the conveying device is configured for conveying a plate- or foil-like commodity to be conveyed (1).

20. Conveying device according to one of the preceding claims,
**characterised in that** the conveying device is configured for use in a wet-chemical or electrolytic treatment plant.

21. Treatment plant for wet-chemical or electrolytic treatment of a workpiece having a conveying device according to one of the preceding claims.

## Revendications

1. Dispositif de transport comprenant :
des moyens de transport (2) agencés de manière rotative afin de déplacer une marchandise de transport (1) dans une direction de transport, et
des moyens d'entraînement (3, 4, 5), lesquels amènent les moyens de transport (2) en mouvement de rotation, de sorte que la marchandise de transport (1) soit déplacée par le mouvement de rotation dans la direction de transport,
moyennant quoi les moyens de transport (2) sont agencés de telle sorte par rapport à une trajectoire de transport de la marchandise de transport qu'ils entrent en contact avec la marchandise de transport (1) lorsque celle-ci parcourt la trajectoire de transport, et
moyennant quoi un axe de rotation des moyens de transport (2) s'étire dans une direction latérale perpendiculairement à la direction de transport,
**caractérisé en ce que**
au moins une partie de broche (4) de forme cylindrique, qui présente sur une surface extérieure une structure filetée (8), et au moins un moyen de rotation (5) doté de saillies agencées sur toute sa périphérie et s'étirant dans la direction d'un axe de rotation du moyen de rotation sont prévus, moyennant quoi au moins une des saillies (6) se trouve en prise avec la structure filetée (8) de la partie de broche (4), de sorte qu'un mouvement de rotation de la partie de broche (4) soit transformé en un mouvement de rotation du moyen de rotation (5), moyennant quoi le mouvement de rotation du moyen de rotation (5) est couplé au mouvement de rotation des moyens de transport (2).

2. Dispositif de transport selon la revendication 1,
**caractérisé en ce que**
les moyens de transport (2) sont agencés des deux côtés de la trajectoire de transport, moyennant quoi les moyens de transport (2) sont placés sur au moins un côté de la trajectoire de transport de manière à être verticalement déplacés, moyennant quoi un premier moyen de rotation (5), dont le mouvement de rotation est couplé avec le mouvement de rotation des moyens de transport (2) agencés sur un premier côté de la trajectoire de transport, comprend des saillies (6) agencées sur toute sa périphérie et s'étirant dans la direction de son axe de rotation, dont au moins une se trouve en prise avec la structure filetée (8) d'au moins une partie de broche (4), et moyennant quoi un second moyen de rotation (5), dont le mouvement de rotation est couplé avec le mouvement de rotation des seconds moyens de transport (2) agencés sur le second côté de la trajectoire de transport opposé au premier côté, comporte des saillies (6) agencées sur toute sa périphérie et s'étirant dans la direction de son axe de rotation, dont au moins une se trouve en prise avec la structure filetée (8) d'au moins une partie de broche (4).

3. Dispositif de transport selon la revendication 1 ou 2,
**caractérisé en ce que**
la au moins une partie de broche (4) est agencée sur un arbre d'entraînement (3) s'étirant parallèlement à la direction de transport, de sorte qu'elle tourne conjointement avec celui-ci.

4. Dispositif de transport selon la revendication 3,
**caractérisé en ce que**
le dispositif de transport comporte plusieurs des moyens de transport (2), lesquels sont agencés en des positions réparties le long de la direction de transport, moyennant quoi une partie de broche (4) est prévue pour chaque position, laquelle est agencée en une position correspondante de l'arbre d'entraînement (3).

5. Dispositif de transport selon l'une quelconque des revendications précédentes,
**caractérisé en ce que**
le moyen de rotation (5) et le moyen de transport (2), dont les mouvements de rotation sont couplés ensemble, sont fixés sur un axe commun en tournant ensemble.

6. Dispositif de transport selon la revendication 2 et l'une quelconque des revendications précédentes,
**caractérisé en ce que**
un axe de rotation de la au moins une partie de broche (4) se trouve dans la direction verticale entre l'axe de rotation du premier moyen de rotation (5) des moyens de transport (2) sur le premier côté de la trajectoire de transport et l'axe de rotation du second moyen de rotation (5) des moyens de transport (2) sur le second côté de la trajectoire de transport.

7. Dispositif de transport selon la revendication 6,
**caractérisé en ce que**
les moyens de transport (2) sont placés de manière mobile sur au moins un côté de la trajectoire de transport, et
**en ce que** l'axe de rotation de la au moins une partie de broche (4) est agencée de manière être décalée d'une partie d'une translation maximale dans la direction verticale des moyens de transport (2) placés de manière mobile, dans la direction de ceux-ci.

8. Dispositif de transport selon l'une quelconque des revendications précédentes,
**caractérisé en ce que**
le dispositif de transport comporte d'autres moyens de transport (2') placés de manière à pivoter par rapport aux moyens de transport (2) sur le même côté de la trajectoire de transport, dont l'axe de rotation est agencé parallèlement à l'axe de rotation des moyens de transport (2), moyennant quoi le dispositif de transport est conçu de manière à ce que les autres moyens de transport (2') soient amenés par le mouvement de rotation des moyens de transport (2) en un mouvement de rotation ayant le même sens de rotation.

9. Dispositif de transport selon la revendication 8,
**caractérisé en ce que**
le dispositif de transport comporte des moyens de roues dentées, lesquels transforment le mouvement de rotation des moyens de transport (2) en mouvement de rotation des autres moyens de transport (2').

10. Dispositif de transport selon la revendication 8 ou 9,
**caractérisé en ce que**
les autres moyens de transport (2') sont conçus comme des moyens de transport de forme cylindrique s'étirant dans la direction latérale.

11. Dispositif de transport selon l'une quelconque des revendications 8 à 10,
**caractérisé en ce que**
les autres moyens de transport (2') comportent des poulies de transport (10, 11), lesquelles sont agencées sur le même axe et éloignées l'une de l'autre.

12. Dispositif de transport selon l'une quelconque des revendications précédentes,
**caractérisé en ce que**
les moyens de transport (2) sont conçus comme des moyens de transport cylindriques s'étirant dans la direction latérale.

13. Dispositif de transport selon l'une quelconque des revendications précédentes,
**caractérisé en ce que**
les moyens de transport (2) comportent des poulies de transport (10, 11), lesquelles sont agencées sur le même axe et éloignées l'une de l'autre.

14. Dispositif de transport selon la revendication 11 ou la revendication 13,
**caractérisé en ce que**
dans la direction de transport des poulies de transport (10, 11) voisines sont agencées de manière être déplacées dans la direction latérale.

15. Dispositif de transport selon la revendication 14,
**caractérisé en ce que**
les poulies de transport (10, 11) sont agencées à distance l'une de l'autre dans la direction de transport de manière à ce que des poulies de transport agencées de manière à être voisines dans la direction transport s'entrecroisent dans la direction de transport.

16. Dispositif de transport selon l'une quelconque des revendications précédentes,
**caractérisé en ce que**
une conicité de la structure filetée (8, 9), l'extension de la au moins une partie de broche (4) le long de son axe de rotation et l'écart radial des saillies (6) du au moins un moyen de rotation (5) par rapport à l'axe de rotation du moyen de rotation (5) sont conçus de manière à engendrer pour une vitesse de rotation déterminée de la au moins une partie de broche (4) une vitesse de transport souhaitée des moyens de transport (2).

17. Dispositif de transport selon l'une quelconque des revendications précédentes,
**caractérisé en ce que**
le dispositif de transport comporte plusieurs des moyens de transport (2), et **en ce que** le dispositif de transport est conçu de manière à ce qu'il y ait la même vitesse de transport pour chacun des moyens de transport (2).

18. Dispositif de transport selon l'une quelconque des revendications précédentes,
**caractérisé en ce que**
les moyens de transport (2) sont placés de manière à être mobiles dans une direction verticale perpendiculaire à la direction de transport, afin de pouvoir s'adapter à des variations de la force de la marchandise de transport (1) dans la direction verticale.

19. Dispositif de transport selon l'une quelconque des revendications précédentes,
**caractérisé en ce que**
le dispositif de transport est conçu pour transporter des marchandises de transport (1) de type en plaques ou en feuilles.

20. Dispositif de transport selon l'une quelconque des revendications précédentes,
**caractérisé en ce que**
le dispositif de transport est conçu pour être utilisé dans une installation de traitement humide par voie chimique ou de traitement électrolytique.

21. Installation pour le traitement humide par voie chimique ou le traitement électrolytique d'une pièce à usiner dotée d'un dispositif de transport selon l'une des revendications précédentes.
